# EUROPÄISCHE PATENTSCHRIFT

(11) **EP 3 317 602 B1**
(45) Veröffentlichungstag und Bekanntmachung des Hinweises auf die Patenterteilung: **08.05.2019**
(21) Anmeldenummer: 16741529.8
(22) Anmeldetag: 27.06.2016
(51) Int. Cl.: F27B 3/10, C21C 5/46, F27B 3/12

(54) **IN EINEN KONVERTER UMGEBAUTER ELEKTROLICHTBOGENOFEN**
BASIC OXYGEN FURNACE CONVERTED FROM AN ELECTRIC ARC FURNACE
CONVERTISSEUR À L'OXYGÈNE ADAPTÉ À PARTIR D'UN FOUR À ARC ÉLECTRIQUE

(30) Priorität: 02.07.2015 DE 102015110674
(43) Veröffentlichungstag der Anmeldung: 09.05.2018
(73) Patentinhaber: SMS Group GmbH, 40237 Düsseldorf (DE)
(72) Erfinder: MELLINGHOFF, Ben, 41068 Mönchengladbach (DE); NÖRTHEMANN, Ralf, 45549 Sprockhövel (DE)
(74) Vertreter: Kross, Ulrich
(86) Internationale Anmeldenummer: PCT/DE2016/100288
(87) Internationale Veröffentlichungsnummer: WO 2017/000935

(56) Entgegenhaltungen:
- EP-A1- 0 717 115
- EP-A1- 0 757 109

## Beschreibung

Die Erfindung betrifft einen in einen Konverter umgebauten Elektrolichtbogenofen (EAF), mit einem Herdteil, einer wassergekühlten, im Wesentlichen ringförmigen zylindrischen Wand als Oberofen und einem auf diesen aufsetzbaren Deckel, der Öffnungen zur Durchführung der Elektroden aufweist.

Lichtbogenöfen gehören zu den mit sogenannter Sekundärenergie betriebenen Öfen, wobei diese Öfen mit Gleichstrom oder Wechsel - (Dreh-) strom arbeiten.

Abgesehen von unterschiedlichen Elektrodenanordnungen oder der Anzahl der Elektroden haben sie einen gemeinsamen Aufbau, der im Wesentlichen aus einen Unterofen oder Herdteil besteht sowie einem Oberofen und einen abschließenden Deckel.

Lichtbogenöfen dienen in der Regel dem Einschmelzen von Schrott, sind also ursprünglich nicht für den Einsatz von flüssigem Einsatz, wie Roheisen bestimmt.

Konverter gehören demgegenüber zu den mit Primärenergie betriebenen Öfen und dienen der Rohstahlerzeugung aus Roheisen, arbeiten somit im Wesentlichen mit flüssigem Einsatz.

Das Konvertergefäß weist einen Boden, einen Schachtbereich und einen sogenannten Hut auf, der aus einem konisch sich verjüngenden oberen Abschnitt besteht. Das gesamte Gefäß ist innen mit einer feuerfesten Auskleidung ausgemauert.

Beim LD Konverter wird durch eine, durch die obere Öffnung des Hutes einführbare, Lanze Sauerstoff auf die Roheisenschmelze aufgeblasen, wodurch insbesondere eine Reduzierung des Kohlenstoffs erfolgt.

Es ergibt sich somit, dass sowohl der EAF wie der BOF auf den Anwendungszweck bzw. den zu behandelnden Einsatz ausgelegt sind.

In beiden Fällen wurde allerdings auch schon mit fest/flüssig Mischungen gearbeitet.

Durch Änderung der, beispielsweise wirtschaftlichen, Rahmenbedingungen kann sich nun der Einsatz ändern, d.h. gegenüber reinem Fest- oder Flüssigeinsatz oder auch Mischungen, kann sich die Notwendigkeit ergeben, beispielsweise mit einem wesentlich höheren Flüssigeinsatz zu arbeiten.

Eine derartige Umstellung ist aber aus den verschiedensten Gründen mit einem Elektrolichtbogenofen nur bedingt möglich, weil der EAF - wie vorstehend erwähnt - an sich für den Einsatz von Schrott oder einem begrenzten Roheiseneinsatz konzipiert ist.

Bei höheren Flüssigeisenanteilen ist die zum Verblasen des Kohlenstoffs notwendige Sauerstoffrate entsprechend höher. Dieser Sauerstoff könnte wie bei einem Konverter durch eine Toplanze zugeführt werden oder durch Türlanzen. Dabei ist aber das Spritzen von Stahl und Schlacke nicht zu verhindern.

Aufgrund der Konfiguration des EAF würde dies aber dazu führen, dass diese Spritzer auch am Deckel des Lichtbogenofens anhaften, so dass dieser mit dem Oberofen verschweißen könnte und nicht mehr geöffnet werden kann. Das Öffnen ist aber für die Schrott Chargierung notwendig.

Die Erfindung soll nun einen Umbau eines EAF zu einem BOF ermöglichen, wobei aber auch die Möglichkeit bestehen soll, diesen Umbau wieder rückgängig zu machen.

Gelöst wird diese Aufgabe erfindungsgemäß den in einen Konverter umgebauten Elektrolichtbogenofens (EAF), mit einem Herdteil, einer wassergekühlten, im Wesentlichen ringförmigen zylindrischen Wand als Oberofen und einem auf diesen aufsetzbaren Deckel, der Öffnungen zur Durchführung der Elektroden aufweist, das dadurch gekennzeichnet ist, dass die wassergekühlte, ringförmig, zylindrische Wand des Oberofens durch einen Oberofen ersetzt wurde, der aus einem feuerfest ausgekleideten Schachtteil besteht und dass auf das Schachtteil ein diesen nach oben abschließender konischer Hut mit Öffnungen zur Abgasabführung aufgesetzt wurde, wobei der Oberofen mit in der Seitenwand angeordneten Injektoren versehen ist, die als Sauerstoffinjektoren einsetzbar sind oder als Brenner.

Ebenso/alternativ ist ein Einbringen von Sauerstoff mittels einer TOP-Lanze möglich.

Vorzugsweise weist der konische Hut eine durch die Abgasabführung verschließbare Öffnung auf, durch die die Chargierung des Konverters erfolgen kann.

Der Kerngedanke der Erfindung ist darin zu sehen, dass der Umbau auf die notwendigsten Maßnahmen beschränkt wird, so dass der zeitaufwand relativ gering ist.

Somit bleibt bei beiden Ofenarten das untere Ofenteil, also das Herdteil, unverändert Damit bleiben auch alle beispielsweise für den Abstich der Schlacke oder des Metalls nachgeordneten Einrichtungen unverändert.

Ausgetauscht wird das als Oberofen bezeichnete Teil, d.h. statt der Wasser gekühlten Wandkonstruktion bei Elektrolichtbogenofen, wird ein Oberofen mit einer Feuerfest-Auskleidung benutzt.

Außerdem wird der beim EAF übliche Deckel des Ofens durch einen Konverterhut ersetzt.

Der auf diese Weise umgestaltete Ofen kann nun mit höheren Flüssigeinsätzen gefahren werden, also im Konverterbetrieb.

Durch die unverändert gebliebenen Anschlüsse bzw. Zusatzaggregate oder -einrichtungen halten sich die Investitionskosten auf einem vergleichbar geringen Niveau und es besteht eben - wie eingangs schon erwähnt - grundsätzlich den Umbau rückgängig zu machen, wenn sich die Rahmenbedingungen geändert haben.

Aus diesem Grund ist diese Variabilität gerade für Anwender interessant, die sich - auf Grund ihrer Größe - unter Umständen geänderten Rahmenbedingungen gegenüber flexibel verhalten müssen.

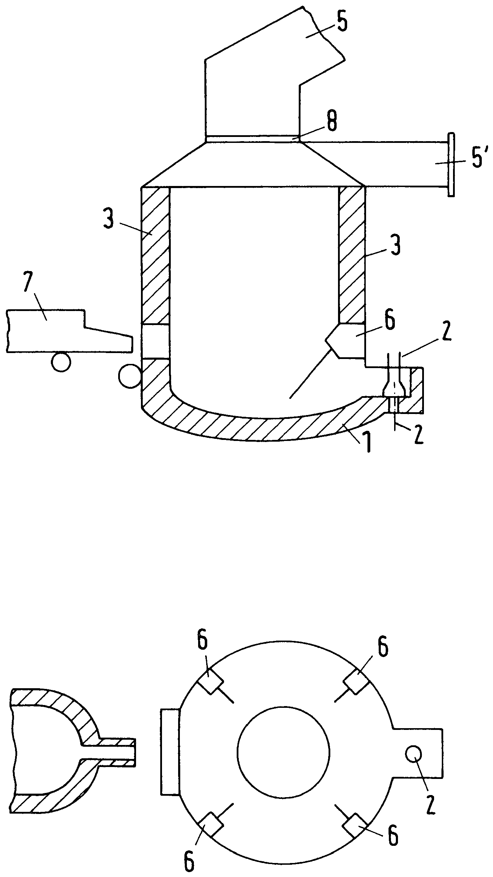

Die Erfindung wird nachfolgend mit Bezug auf die Zeichnung erläutert.

In der schematischen Darstellung ist der Unterofen, also der Herdteil, mit 1 bezeichnet. In dem Herdteil befindet sich der übliche EBT Abstich 2.

Der Oberofen 3 weist eine feuerfest ausgekleidete Wandung auf. Auf den oberen Rand ist der konische Hut 4 angeordnet, der - bei dem gezeigten Ausführungsbeispiel - zwei mögliche Abgasabführungen 5 und 5' aufweist, wobei der Anschluss 8 schwenkbar sein kann, um ein Chargieren von oben zu ermöglichen.

Die in der Seitenwand des Oberofens angeordneten Injektoren sind mit 6 und ein angedeuteter Launder mit 7 bezeichnet.

## Patentansprüche

1. In einen Konverter (BOF) umgebauter Elektrolichtbogenofen (EAF), mit einem Herdteil, einer wassergekühlten, im Wesentlichen ringförmigen zylindrischen Wand als Oberofen und einem auf diesen aufsetzbaren Deckel, der Öffnungen zur Durchführung der Elektroden aufweist,
**dadurch gekennzeichnet,**
**dass** die wassergekühlte, ringförmig, zylindrische Wand des Oberofens durch einen Oberofen ersetzt wurde, der aus einem feuerfest ausgekleideten Schachtteil besteht und dass auf das Schachtteil ein diesen nach oben abschließender konischer Hut mit Öffnungen zur Abgasabführung aufgesetzt wurde, wobei der Oberofen in die Seitenwand als Sauerstoffinjektoren oder als Brenner.eingesetzte Injektoren aufweist.

2. Umgebauter Elektrolichtbogenofen nach Anspruch 1,
**dadurch gekennzeichnet,**
**dass** die Öffnung für die Abgasabführung zur Chargierung des Konverters nutzbar ist

3. Umgebauter Elektrolichtbogenofen nach einem der vorstehenden Ansprüche,
**dadurch gekennzeichnet,**
**dass** der Sauerstoffeintrag durch eine TOP Lanze erfolgt.

## Claims

1. In a basic oxygen furnace (BOF) converted from an electric arc furnace (EAF), with a furnace part, a water-cooled substantially annular cylindrical wall as upper furnace and cover, which is placeable thereon and has openings for passage therethrough of the electrodes, **characterised in that** the water-cooled annular cylindrical wall of the upper furnace was replaced by an upper furnace consisting of a shaft part with refractory lining and that a conical cap with openings for exhaust gas discharge was placed on the shaft part to close this off in upward direction, wherein the upper furnace comprises injectors inserted into the side wall as oxygen injectors or as burners.

2. Converted electric arc furnace according to claim 1, **characterised in that** the opening for exhaust gas discharge is usable for charging the basic oxygen furnace.

3. Converted electric arc furnace according to one of the preceding claims, **characterised in that** oxygen intake is carried out through a TOP lance.

## Revendications

1. Four à arc électrique (EAF) transformé en convertisseur (BOF), comprenant une partie faisant office de foyer, une paroi cylindrique essentiellement de forme annulaire, refroidie à l'eau, à titre de superstructure, et un couvercle qui peut venir se placer par-dessus ladite paroi, qui présente des ouvertures qui sont destinées au passage des électrodes, **caractérisé en ce que** la paroi cylindrique de la superstructure, possédant une forme annulaire, refroidie à l'eau, a été remplacée par une superstructure qui est constituée par une partie faisant office de cuve munie d'un revêtement réfractaire, et **en ce que**, sur la partie faisant office de cuve, a été placé un chapeau terminal de forme conique comprenant des ouvertures pour le guidage des gaz d'échappement ; dans lequel la superstructure présente des injecteurs incorporés dans la paroi latérale pour faire office d'injecteurs d'oxygène ou pour faire office de brûleurs.

2. Four à arc électrique transformé, selon la revendication 1, **caractérisé en ce que** l'ouverture pour le guidage des gaz d'échappement peut être utilisée pour le chargement du convertisseur.

3. Four à arc électrique transformé, selon l'une quelconque des revendications précédentes, **caractérisé en ce que** l'introduction d'oxygène a lieu par l'intermédiaire d'une lance de type TOP.
